# EUROPEAN PATENT SPECIFICATION

(11) **EP 2 414 799 B1**
(45) Date of publication and mention of the grant of the patent: **13.02.2013**
(21) Application number: 10729689.9
(22) Date of filing: 30.03.2010
(51) Int. Cl.: G01L 1/20, G01L 1/14, G01L 5/22, G01G 19/414, A61B 5/103, G01D 5/00, G01R 31/28

(54) **ELECTRONIC CIRCUIT FOR THE EVALUATION OF INFORMATION FROM VARIABLE ELECTRIC RESISTANCE SENSORS**
ELEKTRONISCHE SCHALTUNG ZUR BEURTEILUNG DER DATEN AUS SENSOREN MIT VERÄNDERLICHEM ELEKTRISCHEM WIDERSTAND
CIRCUIT ÉLECTRONIQUE POUR ÉVALUATION D'INFORMATIONS PROVENANT DE CAPTEURS À RÉSISTANCE ÉLECTRIQUE VARIABLE

(30) Priority: 01.04.2009 CZ 20090203
(43) Date of publication of application: 08.02.2012
(73) Proprietor: Ceská Zemedelská Univerzita V Praze, 165 21 Praha 6 (CZ)
(72) Inventor: NOVÁK, Martin, 252 28 Cernosice (CZ); VOLF, Jaromír, 108 00 Praha 10 (CZ)
(74) Representative: Duskova, Hana
(86) International application number: PCT/CZ2010/000037
(87) International publication number: WO 2010/111979

(56) References cited:
- CZ-U1- 19 700
- US-A1- 2002 125 890
- US-A1- 2005 073 320
- RENE NEDELA ET AL: "New generation of plantograf tactile sensor" APPLIED ELECTRONICS, 2009. AE 2009, IEEE, PISCATAWAY, NJ, USA, 9 September 2009 (2009-09-09), pages 187-190, XP031559586 ISBN: 978-80-7043-781-0
- OBALLE-PEINADO O ET AL: "Interface for tactile sensors based on direct connection to a FPGA" MECHATRONICS, 2009. ICM 2009. IEEE INTERNATIONAL CONFERENCE ON, IEEE, PISCATAWAY, NJ, USA, 14 April 2009 (2009-04-14), pages 1-6, XP031457320 ISBN: 978-1-4244-4194-5

## Description

### Field of the Invention

The presented application deals with the electronic circuit for high-speed evaluation of information from variable electric resistance sensors, e.g. from tactile sensors on the base of conductive elastomer.

### Description of the Prior Art

Currently with the development of robotics, automatization and non-invasive diagnostics in medicine, it is all the more necessary to obtain information on the interaction of a robot with the surrounding environment and information on the technical operations that are in progress. Scanning contact pressures belongs to important characteristics of interaction between the systems or their parts. For example, pressure distribution in a tyre in contact with the road surface, conveyor belts, their even stress. It is very important to establish the distribution of pressures in biomechanics between a living organism and the surrounding environment when the pathological distribution of pressures can cause very serious health problems. Likewise, pressure distribution can lead to non-invasive diagnostics of various diseases or to the defect of skeletal-muscular system in humans.

Present systems (US 2002 125 890), most frequently use tactile sensors which utilize piezoresistive materials, piezoresistive foils or conductive elastomers working as a pressure to electric signal transducer. Present sensors on the base of a conductive elastomer utilize scanning voltage or current from an appropriate tactile element for measuring contact pressure surface distribution. The signal is then conducted to a multiplexor and an analogue-to-digital converter, digitalized and further processed. Disadvantages of this solution are the necessity to use a multiplexor for switching over the measured channel, the small speed of scanning the arrangement of contact pressure given by using one analogue-to-digital converter, or possible only a few analogue-to-digital converters, large power consumption, the dependence of the consumption of the device on the magnitude of pressure at individual points of the tactile sensor, or the high cost of electronic equipment given by the high cost of a very fast analogue-to-digital converter.

### Summary of the Invention

Above-mentioned disadvantages are eliminated by an electronic circuit for high-speed information evaluation from variable electric resistance sensors, where this sensor is formed by a matrix composed of columns and rows according to the presented solution. Its principle is that to at least one row and one column of the matrix a circuit is connected, which is formed by a parallel capacitor and resistor combination to which a row switch is connected in series. In addition to this parallel combination a serial combination of a sensor with variable electric resistance and a column switch is attached. Thus formed, the connection of elements is connected to a power supply. The common point of the parallel combination of a capacitor and resistor is interconnected over a wave-shaping circuit with a counter. The row switch is connected to one output terminal of a timing block, to the other output terminal the column switch is connected.

In one possible implementation a protection block is inserted to the serial combination of the variable electric resistance sensor and the column switch, namely between the terminal for connecting the variable electric resistance sensor and the common point of the parallel combination of capacitor and resistor.

In advantageous implementation the row switch can be implemented by a transistor of conductivity type P and the column switch by a transistor of conductivity type N. The wave-shaping circuit can be implemented by the integrated Schmitt flip-flop circuit.

Further, the circuit in advantageous implementation can be perfected with a diode for protecting parts of the circuit from external influences produced by the variable electric resistance sensors. The diode is oriented by the anode towards the resistor and by the cathode towards the sensor.

The presented electronic circuit enables the elimination of the analogue-to-digital converter from the measuring system and thus eliminating its high cost. Further, with its simple construction it enables forming a parallel scanning system and thus creating a high-speed one whose power consumption is not, thank to circuit timing, dependant on the magnitude of pressure of individual tactile sensors.

### Brief Description of the Drawings

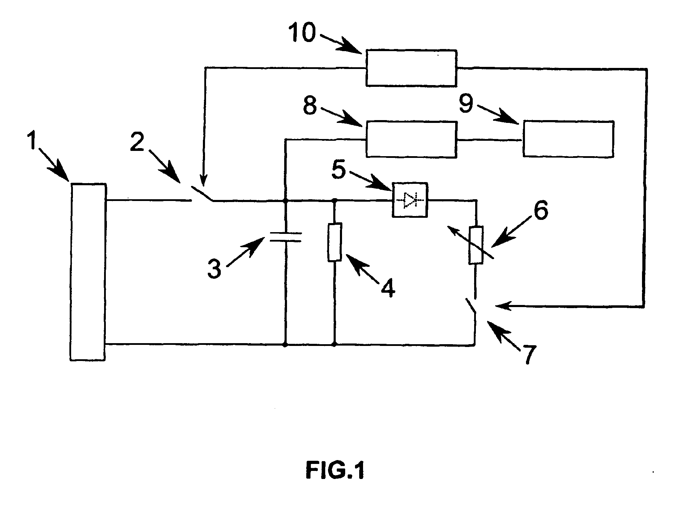

The invention and its effects are explained in greater detail in the description of an example of its implementation, according to the attached drawing which represents the block diagram of the presented electronic circuit for high-speed information evaluation from variable electric resistance sensors, e.g. from tactile sensors on the base of the conductive elastomer.

### Detailed Description of the Preffered Embodiments

The electronic circuit for high-speed information evaluation from variable electric resistance sensors, where this sensor is formed by a matrix composed of columns and rows, consists of electric power supply 1, row switch 2, capacitor 3, resistor 4, wave-shaping circuit 8, column switch 7, counter 9, timing block 10.

To the parallel combination of capacitor 3 and resistor 4 a row switch is connected in series. Parallel to the formed combination is then connected a serial combination of variable electric resistance sensor 6 which is connected to circuit terminals, and column switch 7. The whole connection of elements that has been formed in this way is connected to power supply 1. The parallel combination of capacitor' 3 and resistor 4 is connected to the input of wave-shaping circuit 8, its output terminal is connected to the input of counter 9. Row switch 2 is connected to output terminal of timing block 10 to whose other output terminal a column switch 7 is connected.

In the advantageous implementation, which is the simplest, row switch 2 can be implemented by a transistor with conductivity type P and column switch 7 by transistor with conductivity type N. Simultaneously, wave-shaping circuit 8 can be implemented by the integrated Schmitt flip-flop circuit. For implementation of row switch 2 and column switch 7 it is possible to use any other combination of transistors of type N or P, however, this way the circuit is made more complicated, therefore more expensive.

Furthermore, the advantageous circuit implementation can be completed by block 5, protecting the circuit from outside influences coming in from the direction of variable electric resistance sensor 6. The simplest way of protection is to incorporate a diode whose anode is oriented towards resistor 4 and cathode towards sensor 6.

The working cycle of the presented circuit is divided into two phases which are controlled by timing block 10.

In the first phase row switch 2 is connected, column switch 7 is disconnected. Capacitor 3 to which resistor 4 is connected in parallel, is charged by power supply 1. The parallel combination of capacitor 3 with resistor 4 ensures discharging of capacitor 3, also in the case of working with disconnected or defective variable electric resistance sensor 6.

In the second phase row switch 2 is disconnected, column switch 7 is connected. Through the resistance of variable electric resistance sensor 6, capacitor 3 is discharged, with the speed of discharging dependant on the current resistance of variable electric resistance sensor 6. The magnitude of the current resistance of variable electric resistance sensor 6 is in this way transferred to discharging time of capacitor 3. From the parallel combination of capacitor 3 and resistor 4, a signal is taken to wave-shaping circuit 8 which provides the transfer of the analogue signal to logical level L or H and increases noise immunity. The time period of a signal established in this way is measured by counter 9 and sent for further processing. By forming a greater number of above-described circuits for each row or, possibly, column, it is possible to substantially increase the speed of the scanning, and at the same time to reduce the costs of evaluation electronics, compared to using more parallel analogue-to-digital converters. The outcome of a circuit formed this way is the information about the value monitored from variable electric resistance sensor 6, originally an analogue value converted to digital form. For example, in case of using a tactile sensor in place of sensor with variable electric resistance 6, the output number from counter 9 is proportional to the force acting to the given variable electric resistance sensor 6. The obtained digital information can be, for example, displayed on the monitor of a computer, stored on the storage medium or processed in some other way.

### Industrial Applicability

The described electronic circuit for high-speed evaluation of information from variable electric resistance sensors makes it possible to increase the speed of scanning from sensors in unison with removing the high-speed analogue-to-digital converter and thus reducing the price of the resultant device. At the same time it makes it possible to reduce power consumption, to remove the dependence of power consumption on the measured force, and it makes parallel evaluation possible for a great number of parallel rows and columns of a sensor.
In combination with, e.g., a proportional pressure distribution sensor it is applicable to the field of medical orthopaedics and biomechanics for studying pressure distribution on the soles of feet and its dynamic changes during a step. Determining pressure distributions on the soles of feet and their time progress is valuable information contributing to non-invasive diagnostics of motoric activity defects, orthopaedic defects and a number of other disorders, as well as contributing to preventing pathological pressures on a human body causing bedsores, e.g. an intelligent bed. In stabilometry the mentioned sensors can be used for measuring stability, they can be used in physiotherapy, for developing therapy aids and artificial limbs and also for biological feedback, so-called biofeedback. The circuit is also applicable for designing anatomical shapes of seats and back rests, especially in automobile and aircraft industries. Practical use can also be found in sports medicine and methodology, in robotics for stability and balancing of robots, for determining the fixed point of grip, determining force, etc. and in other industrial applications where the knowledge of pressure distribution is required, e.g. tyre - road surface.

## Claims

1. Electronic circuit for the evaluation of information from variable electric resistance sensors, where this sensor is formed by a matrix composed of columns and rows **wherein** at least one row and one column of the matrix is connected to a circuit which is formed by parallel combination of capacitor (3) and resistor (4) to which row switch (2) is connected in series, and parallel to that is connected a serial combination consisting of terminals for connecting variable electric resistance sensor (6) and column switch (7), where thus formed connection of elements is connected to power supply (1) and where the common point of parallel combination of capacitor (3) and resistor(4) is connected over a wave-shaping circuit (8) to counter (9) whereas row switch (2) is connected to one output of timing block (10) to whose other output is connected column switch (7).

2. Electronic circuit according to claim 1 **wherein a** protection block (5) is inserted between the terminal for connecting variable electric resistance sensor (6) and the common point of parallel combination of capacitor (3) and resistor (4).

3. Electronic circuit according to claims 1 or 2 **wherein** row switch (2) is realized by a transistor of conductivity type P and column switch (7) is implemented by a transistor of conductivity type N.

4. Electronic circuit according to any of the claims 1 to 3 **wherein** wave-shaping circuit (8) is being the Schmitt flip-flop circuit.

5. Electronic circuit according to any of the claims 1 to 4 **wherein** protection block (5) is being formed by a diode which is oriented by the anode towards resistor (4) and by the cathode towards variable electric resistance sensor (6).

## Patentansprüche

1. Der elektronische Kreis für die Bewertung der Informationen von den Sensoren mit dem variablen elektrischen Widerstand in dem dieser Sensor mit der aus Spalten und Zeilen bestehenden Matrize gebildet ist, **dadurch gekennzeichnet, dass** mindestens an eine Zeile, sowie an eine Spalte der jeweiligen Matrize ein Kreis angeschlossen ist, der aus der parallelen Kombination vom Kondensator (3) und vom Widerstand (4) besteht, an die der Zeilenschalter (2) seriell angeschlossen ist, sowie an die die serielle Kombination parallel angeschlossen ist, die aus den Klemmen zum Anschluss des Sensors (6) mit dem variablen elektrischen Widerstand, sowie aus dem Spaltenschalter (7) besteht, wo auf diese Weise gestaltete Schaltung von jeweiligen Elementen an das Netzgerät (1) angeschlossen ist und wo der gemeinsame Punkt der parallelen Kombination des Kondensators (3) und des Widerstandes (4) über den Impulsformer (8) mit dem Zählgerät (9) verbunden ist, wobei der Zeilenschalter (2) an einen Ausgang der Zeitsteuerung (10), deren der zweite Ausgang mit dem jeweiligen Zeilenschalter (7) verbunden ist, angeschlossen ist.

2. Der elektronische Kreis nach dem Anspruch 1, **dadurch gekennzeichnet, dass** zwischen die Klemme für den Anschluss des Sensors (6) mit dem variablen elektrischen Widerstand und den gemeinsamen Punkt der parallelen Kombination des Kondensators (3) und des Widerstandes (4) eine Schutzeinheit (5) eingelegt ist.

3. Der elektronische Kreis nach dem Anspruch 1 oder 2, **dadurch gekennzeichnet, dass** der Zeilenschalter (2) als Transistor mit einer Leitungsfähigkeit P, sowie der Spaltenschalter (7) als Transistor mit einer Leitungsfähigkeit N ausgeführt ist.

4. Der elektronische Kreis nach jedwedem der Ansprüche 1 bis 3, **dadurch gekennzeichnet, dass** der Impulsformer (8) der Schmitt-Trigger ist.

5. Der elektronische Kreis nach jedwedem der Ansprüche 1 bis 4, **dadurch gekennzeichnet, dass** die Schutzeinheit (5) aus einer Diode besteht, die über eine Anode zum Widerstand (4), sowie über eine Katode zum Sensor (6) mit dem variablen elektrischen Widerstand orientiert ist.

## Revendications

1. Le circuit électronique pour l'évaluation des informations des capteurs à résistance électrique variable où ce capteur est constitué d'une matrice, composée de colonnes et de rangées, dont la caractéristique essentielle est qu'au moins une rangée et une colonne de la matrice sont connectées à un circuit, formé d'une combinaison parallèle d'un condensateur (3) et d'une résistance (4) à laquelle un commutateur de rangée (2) est connecté en série, et en parallèle elle est connectée à une combinaison sérielle constituée de bornes pour connecter un capteur (6) à résistance électrique variable et d'un commutateur de colonne (7), où la connexion d'éléments ainsi formée est connectée à une alimentation (1) et où le point commun d'une combinaison parallèle du condensateur (3) et de la résistance (4) est connecté via un circuit de mise en forme d'onde (8) à un compteur (9), et le commutateur de rangée (2) est connecté à une sortie du bloc (10) de temporisation, dont la deuxième sortie est connectée au commutateur de colonne (7).

2. Le circuit électronique selon la revendication 1 **caractérisé par le fait qu'**entre la borne pour connecter le capteur (6) à résistance électrique variable et le point commun d'une combinaison parallèle d'un condensateur (3) et d'une résistance (4) il est inséré un bloc de protection (5).

3. Le circuit électronique selon la revendication 1 ou 2 **caractérisé par le fait que** le commutateur de rangée (2) est réalisé par un tranzistor de conductivité de type P et le commutateur de colonne (7) est réalisé par un tranzistor de conductivité de type N.

4. Le circuit électronique selon n'importe quelle revendication des 1 à 3 **caractérisé par le fait que** le circuit de mise en forme d'onde (8) est un circuit flip-flop de Schmitt.

5. Le circuit électronique selon n'importe quelle revendication des 1 à 4 **caractérisé par le fait que** le bloc (5) de protection est formé d'une diode, dont l'anode est orientée vers la résistance (4) et la cathode vers le capteur (6) à résistance électrique variable.
